# EUROPÄISCHE PATENTSCHRIFT

(11) **EP 2 844 448 B1**
(45) Veröffentlichungstag und Bekanntmachung des Hinweises auf die Patenterteilung: **02.11.2016**
(21) Anmeldenummer: 13716196.4
(22) Anmeldetag: 21.03.2013
(51) Int. Cl.: B29C 41/20, B29D 11/00, B29K 105/00, B29K 83/00

(54) **VERFAHREN ZUR HERSTELLUNG EINES OPTISCHEN MODULS MIT EINER POLYMEROPTIK**
PROCESS FOR THE MANUFACTURE OF AN OPTICAL MODULE WITH POLYMER OPTICS
PROCÉDÉ DE FABRICATION D'UN MODULE OPTIQUE AVEC UNE OPTIQUE EN POLYMÈRE

(30) Priorität: 02.05.2012 DE 102012008640
(43) Veröffentlichungstag der Anmeldung: 11.03.2015
(73) Patentinhaber: Heraeus Noblelight GmbH, 63450 Hanau (DE)
(72) Erfinder: PEIL, Michael, 64853 Otzberg (DE); SCHADT, Susanne, 63505 Langenselbold (DE); MAIWEG, Harald, 41352 Korschenbroich (DE); HELMLING, Marcus, 64732 Bad König (DE)
(74) Vertreter: Heraeus IP
(86) Internationale Anmeldenummer: PCT/EP2013/000863
(87) Internationale Veröffentlichungsnummer: WO 2013/164055

(56) Entgegenhaltungen:
- EP-A1- 1 142 682
- EP-A1- 2 189 823
- WO-A1-92/08998
- WO-A1-2004/054773
- WO-A1-2012/031703
- GB-A- 582 248
- US-A1- 2002 064 666
- US-A1- 2012 100 344

## Beschreibung

Die Erfindung betrifft ein Herstellungsverfahren für ein optisches Modul, umfassend das Überdecken einer ersten Oberfläche eines Substrats mit einem polymeren Vergussmittel in einer offenen Gießform. Die Erfindung betrifft zudem ein optisches Modul, umfassend ein Substrat mit einer ersten Oberfläche und eine auf der ersten Oberfläche aufgebrachte Schicht aus einem polymeren Vergussmittel, wobei in der Schicht aus Vergussmittel ein optisches Element mittels eines offenen Gießverfahren ausgebildet ist.

WO 2012/031703 A1 beschreibt ein Herstellungsverfahren für Chip-On-Board-Module, bei denen ein Substrat einen plattenförmigen Träger mit mehreren LEDs umfasst, wobei eine Oberfläche des Substrats in einer offenen Gießform überdeckend mit einer Schicht zur Ausbildung einer Optik versehen wird.

US 2002/064666 A1 offenbart ein auf einem Dialkyldialkoxysilan und einem Trialkoxysilan basierendes Sol-Material, welches zur Herstellung eines auf einem Organopolysiloxan basierenden, auf einem Substrat aufgebrachten Films verwendet wird.

EP 2 189 823 A1 betrifft ein auf Harzmaterialien basierendes optisches Element umfassend ein Basismaterial und eine Harzschicht, wobei die Harzschicht durch Polymerisation einer Precursor-Zusammensetzung basierend auf einem difunktionellen fluorinierten (Meth)Acrylat und einem difunktionellen fluorinierten (Meth)Acrylat mit einer Fluoren-Struktur erhalten wird.

US 2012/100344 A1 betrifft ein auf Harzmaterialien basierendes optisches Element umfassend ein optisches Substrat und eine Harzschicht, wobei die Harzschicht durch Polymerisation einer Zusammensetzung ebenfalls basierend auf einer (Meth)Acrylat-Verbindung erhalten wird.

GB 582 248 A betrifft eine zur Herstellung eines optischen Elementes einsetzbare Harzmasse ("syrup"), welche neben einem Polymer (z. B. Polymethylmethacrylat) monomere Verbindungen (z. B. Methylmethacrylat) beinhaltet.

WO 92/08998 A1 offenbart eine durchsichtige Trägerfolie, die z.B. als durchsichtiger Überzug zum Schutz von Dokumenten vor Manipulation verwendet wird, wobei die eine Seite dieser Trägerfolie im wesentlichen eben ist und die andere Seite eine Anordnung von im wesentlichen halbkugeligen Mikrolinsen umfasst. Die Herstellung der halbkugeligen Mikrolinsen erfolgt mittels einer härtbaren, lösungsmittelfreien, durch Strahlung additionspolymerisierbaren, vernetzbaren, organischen oligomeren Zusammensetzung, wobei die harten Segmente Polyurethan und die weichen Segmente Polyester sind.

EP 1 142 682 A1 offenbart ein auf einem Dialkyldialkoxysilan und einem Trialkoxysilan basierendes Sol-Material, welches zur Herstellung eines auf einem Organopolysiloxan basierenden, auf einem Substrat aufgebrachten Films verwendet wird.

WO 2004/054773 A1 offenbart ein Verfahren zur Herstellung einer Replik, bei dem eine aushärtbare, auf Silikon basierende Zusammensetzung in einer Gussform, die dem negativ des zu replizierenden Gegenstandes entspricht, auf ein Substrat aufgebracht wird.

Es ist die Aufgabe der Erfindung, ein Verfahren zur Herstellung eines optischen Moduls anzugeben, das eine breite Einsatzmöglichkeit aufweist.

Diese Aufgabe wird gelöst durch ein Verfahren zur Herstellung eines optischen Moduls, umfassend die Schritte:
a. Bereitstellen eines als lichtdurchlässiger Träger ausgebildeten Substrats mit einer ersten Oberfläche;
b. Bereitstellen einer offenen Gießform, wobei in der Gießform die Ausformung zumindest eines optischen Elements ausgebildet ist;
c. Überdecken der Oberfläche mit einem polymeren Vergussmittel in der offenen Gießform unter Ausbildung des optischen Elements aus dem Vergussmittel; wobei das polymere Vergussmittel (3) zumindest überwiegend aus einem Silikon besteht;
d. Aushärten des Vergussmittels in der Gießform, wobei der lichtdurchlässige Träger und das Vergussmittel insgesamt eine Optik ausbilden, wobei die erste Oberfläche (5) vor dem Überdecken mit dem polymeren Vergussmittel (3) mit einem Haftvermittler (2) beschichtet wird und wobei der Haftvermittler (2) aus einem Gemisch aus reaktiven Siloxanen und Siliziumharzen besteht.

Eine erfindungsgemäße Optik kann auf einfache Weise aus jeweils den Anforderungen angepassten Materialien hergestellt werden. Bei einer solchen Optik kann der Träger im Prinzip aus demselben oder einem anderen Material bestehen als die aufgebrachte Schicht. Bevorzugt besteht der Träger zum Beispiel aus einem Glas. Es kann sich insbesondere um UVdurchlässiges Glas handeln, zum Beispiel Quarzglas.

Unter einem optischen Element im Sinne der Erfindung ist jede Ausformung in der Schicht zu verstehen, die einen wohldefinierten Durchtritt von Licht, je nach Anforderungen auch im UV-Bereich und/oder im IR-Bereich, erlaubt. Bei bevorzugten Ausführungsformen kann es sich bei dem optischen Element insbesondere um eine Linse, zum Beispiel Sammellinse, Streulinse, Zylinderlinse, Fresnel-Linse oder Ähnliches handeln. Bei anderen Ausführungsformen kann das optische Element aber auch in einer Streuung des Lichts, einer Aufspaltung durch ein Prisma, oder Ähnlichem bestehen. Auch die Ausbildung von planparallelen Flächen zum einfachen Durchtritt des Lichts ist eine Optik im Sinne der Erfindung. Die polymere Schicht mit dem darin ausgeformten optischen Element bildet eine unmittelbar auf dem Substrat angeordnete Optik aus.

Das Überdecken des Substrats in der Gießform kann auf verschiedene Weise erfolgen. Entweder kann das Vergussmittel zunächst in die Gießform verbracht werden, wonach das Substrat in das Vergussmittels eingetaucht wird. Alternativ hierzu kann auch zunächst das Substrat in die zumindest teilweise leere Gießform eingesetzt werden, wonach das Vergussmittel kontrolliert eingefüllt wird. In jedem Fall hat die Gießform bevorzugt Strukturen wie Stege, Nasen oder Ähnliches, an denen das Substrat aufliegt und positioniert wird.

Bei einem bevorzugten Ausführungsbeispiel enthält das Vergussmittel keinen Haftvermittler als Beimischung. Hierdurch ist ein leichtes Lösen von der Gießform erzielbar, wobei in geeigneten Fällen auch auf die Verwendung einer Trennfolie verzichtet werden kann. Zudem ist bei einigen Vergussmitteln, zum Beispiel Silikonen unter anderem eine besonders gute UV-Durchlässigkeit erzielbar.

Bevorzugt kann das Vergussmittel einen Katalysator zur Einleitung eines Aushärtungsvorgangs enthalten. Zum Beispiel kann es sich dabei um sehr geringe Beimengungen an Platin oder ähnlichen Stoffen handeln. durch die katalytische induzierte Aushärtung kann eine hohe Reinheit des Vergussmittels erzielt werden. Insbesondere bevorzugt erfolgt die Aushärtung des Vergussmittels vorliegend nicht mittels UV-Licht, da in vielen Fällen gerade eine hohe Durchlässigkeit für UV-Licht gewünscht ist.

Weiterhin bevorzugt umfasst das Verfahren den Schritt eines Erwärmens des Vergussmittels in der Gießform auf eine definierte Temperatur zur Einleitung und/oder Beschleunigung einer Aushärtung. Zum Beispiel kann eine katalytisch induzierte Aushärtung durch Erwärmen beschleunigt werden, was das Verfahren effektiver macht und die notwendige Katalysatormenge weiter reduziert. Es sind aber auch Aushärtungen denkbar, die ausschließlich durch erhöhte Temperatur erfolgen. Typische definierte Temperaturen liegen unterhalb von Bereichen, in denen eine Versprödung oder sonstige Degeneration des Vergussmittels zu erwarten ist. Wenn zum Beispiel das Vergussmittel ein Silikon ist, liegen beispielhafte Temperaturbereiche bei etwa 100 °C, bevorzugt bei weniger als 140 °C. Die definierte Temperatur hängt unter anderem auch davon ab, welche Temperaturen mit dem Substrat kompatibel sind.

Erfindungsgemäß ist der Schritt vorgesehen, die erste Oberfläche mit einem Haftvermittler vor dem Überdecken mit dem polymeren Vergussmittel zu beschichten. Durch das Aufbringen eines Haftvermittlers auf die zu beschichtende Oberfläche des Substrats kann eine Beimengung von Hilfsstoffen zu dem Vergussmittel in der Gießform vermieden oder verringert werden. Zudem steht eine größere Klasse von Vergussmitteln für die Beschichtung zur Verfügung. Ein weiterer, vorteilhafter Effekt ist ein gutes Ablösen des ausgehärteten Vergussmittels von der Gießform. Insbesondere kann dabei vorliegend auf eine Beschichtung der Gießform oder die Auslegung der Gießform mit einer Trennfolie verzichtet werden.

Zur Minimierung nachteiliger Effekte im Bereich des Übergangs vom Substrat auf das Silikon ist bevorzugt vorgesehen, dass der Haftvermittler in einer mittleren Schichtdicke von weniger als 100 nm auf die Oberfläche aufgebracht wird. Dabei ist für die optischen Eigenschaften unter anderem wünschenswert, dass eine Schichtdicke des Haftvermittlers unterhalb einer halben Wellenlänge des durch das optische Element tretenden Lichts liegt. Weiter bevorzugt beträgt die Schichtdicke weniger als 10 nm, insbesondere nicht mehr als 10 Monolagen. Aufgrund der Funktion des Haftvermittlers ist die Aufbringung von nur einer Monolage ideal und gewünscht.

Ein Auftrag des Haftvermittlers auf das Substrat kann auf geeignete Weise erfolgen, zum Beispiel durch Eintauchen, Aufdampfen, Auftropfen, Aufsprühen oder mittels Rotationsbeschichtung. Besonders bevorzugt erfolgt nach dem Auftrag eine Ausdünnung der aufgetragenen Schicht, zum Beispiel durch Abblasen überschüssigen Haftvermittlers.

Der Haftvermittler ist bevorzugt selber UV-stabil. Eine Degenerierung des Haftvermittlers durch UV-Strahlung kann zumindest dann toleriert werden, wenn die Schicht ausreichend dünn ist. Haftvermittler für Vergussmittel sind allgemein bekannt und hängen vom jeweilig zu verwendenden Substrat ab. Häufig haben Haftvermittler Moleküle mit einer ersten Endgruppe, die an dem Substrat anbindet und einer zweiten Endgruppe, die an dem Vergussmittel anbindet. Bevorzugt handelt es sich um einen Haftvermittler, der an dem Vergussmittel über chemische Bindungen anbindet. An dem Substrat kann der Haftvermittler je nach Umständen chemisch und/oder physikalisch anbinden, zum Beispiel über Adhäsion oder van-der-Waals-Kräfte. Der Haftvermittler besteht aus einem Gemisch aus reaktiven Siloxanen und Siliziumharzen. Insbesondere können die Endgruppen entsprechend dem Substrat optimiert sein.

Zur Optimierung des offenen Gießverfahrens ist es vorgesehen, dass das Vergussmittel vor einer Aushärtung eine Viskosität von weniger als 1000 mPa*s aufweist. Bevorzugt beträgt die Viskosität weniger als 100 mPa*s, besonders bevorzugt weniger als 50 mPa*s. Diese niedrigen Viskositäten erlauben eine blasenfreie und schnelle Füllung der Gießform und insbesondere ein blasenfreies Bedecken des Substrats. Dabei kann zum Beispiel überschüssiges Vergussmittel, das von dem eingetauchten Substrat verdrängt wird, leicht an einem Überlauf abfließen.

Allgemein vorteilhaft ist es vorgesehen, dass das ausgehärtete Vergussmittel eine Härte im Bereich von 10 bis 90 Shore A aufweist. Besonders bevorzugt liegt die Härte im Bereich von 50 bis 75 Shore A. Hierdurch ist eine ausreichende mechanische Stabilität gegeben, um eine genaue Formgebung auch einer anspruchsvollen Optik sicher zu stellen. Zugleich bietet die Beschichtung durch ihre hohe Elastizität einen sehr guten Schutz vor mechanischen Einwirkungen wie Stößen, Vibrationen oder thermisch bedingten mechanischen Verspannungen.

Bei einer allgemein bevorzugten Ausführungsform ist es vorgesehen, dass das aus dem Vergussmittel bestehende optische Element eine dauerhafte UV-Beständigkeit gegenüber Bestrahlungsstärken von mehr als 1 W/cm² im Bereich von weniger als 400 nm Wellenlänge aufweist. Besonders bevorzugt kann die Beständigkeit auch gegenüber Bestrahlungsstärken von mehr als 10 W/cm² bestehen. Es hat sich gezeigt, dass insbesondere hochreines Silikon ein sehr gutes Material zur Verwendung mit UV-Strahlung darstellt. Unter dauerhafter Beständigkeit ist dabei zu verstehen, dass die Bestrahlung über einen langen Zeitraum von wenigstens einigen Monaten anliegen kann, ohne dass das Silikon merklich degeneriert oder verfärbt bzw. ausgilbt. Die bevorzugte UV-Beständigkeit eines erfindungsgemäßen Moduls liegt somit erheblich über einer üblichen UV-Beständigkeit von Material gegenüber Sonneneinstrahlung, die als rund 0,15 W/cm² abgeschätzt werden kann.

Erfindungsgemäß ist es vorgesehen, dass das polymere Vergussmittel zumindest überwiegend aus einem Silikon besteht. Silikone bringen gute Voraussetzungen zur effektiven Verarbeitung in einer offenen Gießform mit sich, zum Beispiel hinsichtlich Viskosität, Reaktivität, Adhäsion etc..

Bei einer bevorzugten Weiterbildung ist es vorgesehen, dass das Silikon unmittelbar vor einem Einbringen in die Gießform als Gemisch zumindest zweier Silikone ausgebildet wird. Solche zwei- oder mehrkomponentigen Systeme sind am Markt erhältlich, wobei durch die Mischung zweier insbesondere hochreiner Silikone wiederum ein hochreines Silikon erhalten wird, bei dem jedoch durch die Mischung ein Aushärtungsvorgang bzw. eine Vernetzung gestartet wird. So kann zum Beispiel eines der beiden Silikone so ausgelegt sein, dass es einen Katalysator zur Aushärtung des Gemisches enthält, der dieses Silikon allein aber nicht vernetzt.

Allgemein vorteilhaft ist das Silikon hochrein und enthält weniger als 100 ppm an Fremdstoffen. Besonders bevorzugt beträgt der Gehalt an Fremdstoffen weniger als 10 ppm. Unter Fremdstoffen sind dabei sämtliche organischen oder sonstigen Beimengungen bis auf einen Katalysator zu verstehen, die nicht zu dem vernetzten, ausgehärteten Silikonsystem an sich gehören. Ein Beispiel für unerwünschte Fremdstoffe sind beigemengte Haftvermittler. Allgemein werden als unerwünschte Fremdstoffe auch Komponenten angesehen, die Kohlenstoff-Kettenbindungen aufweisen. Solche Bindungen sind regelmäßig nicht UV-stabil. Ein erfindungsgemäß gewünschtes Silikon weist daher zumindest nach der Aushärtung allenfalls einzelne Kohlenstoff-Atome auf, zum Beispiel in Form von Methyl-Restgruppen. Durch die hohe Reinheit des Silikons kann insbesondere eine besonders hohe UV-Beständigkeit erzielt werden. Dies betrifft nicht nur eine mechanische Beständigkeit des Silikons, sondern auch eine optische Beständigkeit, da bei Vorliegen bereits geringer Verunreinigungen ein frühzeitiges Vergilben des UV-bestrahlten Silikons auftritt.

Erfindungsgemäße optische Module können je nach Auslegung hohe Strahlungsintensitäten insbesondere im UV-Bereich oder auch im IR-Bereich transmittieren. Sie können bevorzugt zum Bau von Leuchten verwendet werden, die hohe Bestrahlungsdichten in eine definierte Struktur bündeln. Eine besonders bevorzugte Verwendung besteht für den Bau von Vorrichtung zur Trocknung von Beschichtungen. Solche Vorrichtungen können etwa für die Trocknung von Lacken bei Druckverfahren, insbesondere Offset-Druckverfahren, verwendet werden.

Bei einer weiteren bevorzugten Ausführungsform ist es vorgesehen, dass zudem nach Schritt d eine zweite Oberfläche beschichtet wird, wobei die Beschichtung der zweiten Oberfläche ebenfalls die Verfahrensschritte a bis e umfasst. So kann zum Beispiel eine Optik mit zwei gleich oder verschieden geformten Schichtseiten auf dem zentralen Träger, zum Beispiel einer Glasplatte, hergestellt werden.

Die zweite Oberfläche kann dabei entweder eine zweite Oberfläche des Substrats sein, zum Beispiel im Fall der Beschichtung einer der ersten Beschichtung gegenüberliegenden Substratseite, oder auch eine andere Oberfläche. Insbesondere kann es sich um eine äußere Oberfläche der ersten Beschichtung handeln, auf die dann in erneuter Anwendung des Verfahrens eine zweite Beschichtung aufgebracht wird. Je nach Anforderungen kann die zweite Schicht unmittelbar auf die erste Schicht aufgebracht werden. Alternativ hierzu kann die zweite Oberfläche auch zu einer Zwischenschicht wie einer Vergütung, Metallbedampfung etc. gehören, die zum Beispiel zunächst auf die erste Beschichtung aufgebracht wird.

Weitere Vorteile und Merkmale der Erfindung ergeben sich aus dem nachfolgend beschriebenen Ausführungsbeispiel sowie aus den abhängigen Ansprüchen.

Nachfolgend werden mehrere bevorzugte Ausführungsbeispiele der Erfindung beschrieben und anhand der anliegenden Zeichnungen näher erläutert.
- Fig. 1: zeigt Schnittansichten von drei Abwandlungen eines erfindungsgemäßen optischen Moduls.
- Fig. 2: zeigt zwei Darstellungen einer offenen Gießform und eines Substrats im Zuge der erfindungsgemäßen Herstellung eines optischen Moduls.
- Fig. 3: zeigt eine Abwandlung der Gießform aus Fig. 2.
- Fig. 4: zeigt eine erste Weiterbildung eins Moduls nach Fig. 1.
- Fig. 5: zeigt eine zweite Weiterbildung eines Moduls nach Fig. 1.
- Fig. 6: zeigt ein Beispiel einer Verwendung eines Moduls nach Fig. 1.
- Fig. 7: zeigt ein Beispiel einer kombinierten Verwendung verschiedener Ausführungsbeispiele der Erfindung.

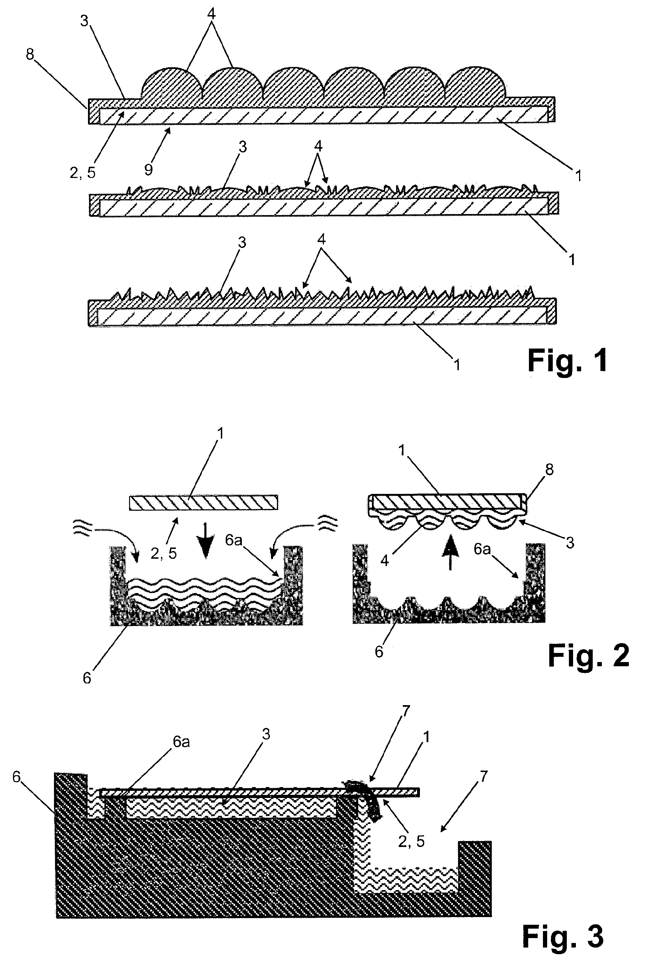

Ein optisches Modul nach Fig. 1 umfasst ein Substrat 1, auf dem eine Schicht aus einem Haftvermittler 2 aufgebracht ist. Auf dem Haftvermittler 2 ist eine geformte Schicht 3 aus einem polymeren Vergussmittel aufgebracht, die vorliegend eine Mehrzahl von optischen Elementen 4 in Form von Sammellinsen umfasst. Bei den nachfolgend beschriebenen Ausführungsbeispielen handelt es sich bei dem Vergussmittel jeweils um ein Silikon.

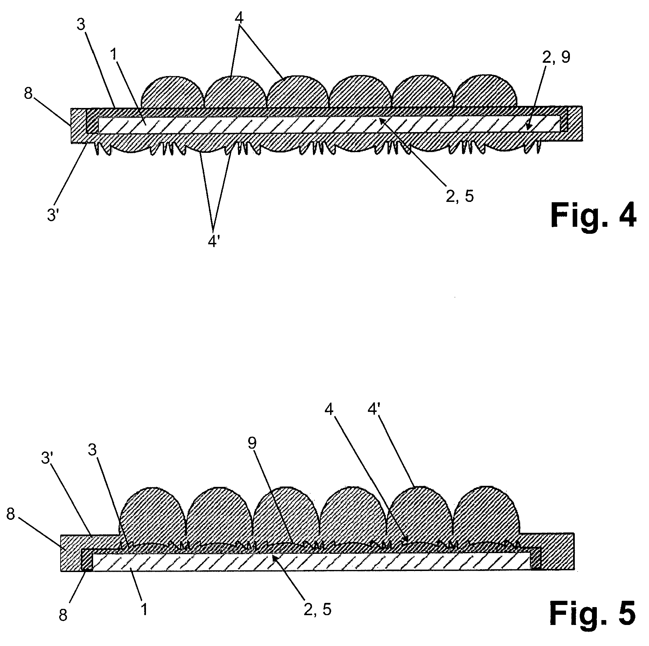

Dabei besteht das Substrat aus einem lichtdurchlässigen Träger 1, vorliegend einer Glasplatte. Der Träger 1 bildet zusammen mit einer oder mehrerer analog zum ersten Beispiel aufgebrachten Silikonschichten 3, 3' (siehe auch Fig. 4, Fig. 5) mit darin ausgebildeten optischen Elementen 4, 4'eine Optik 10 aus. Vorliegend sind die Substrate bzw. lichtdurchlässigen Träger 1 jeweils als Platten mit planparallelen Oberflächen dargestellt. Je nach Anforderungen kann aber auch der Träger optische Elemente wie z.B. Linsen umfassen.

Bei dem oberen Beispiel nach Fig. 1 sind die optischen Elemente 4 als Sammellinsen ausgebildet.

Bei dem mittleren Beispiel nach Fig. 1 sind die optischen Elemente 4 als Fresnel-Linsen ausgebildet.

Bei dem unteren Beispiel nach Fig. 1 ist das optische Element 4 als quasi-zufällige Ansammlung lichtbrechender Strukturen bzw. Ausformungen ausgebildet, wodurch ein Streueffekt erzielt wird.

Die Schichten 3, 3' bestehen jeweils aus einem hochreinen Silikon mit einer Härte von etwa 65 Shore A. Das Silikon ist farblos und transparent. Es ist im Wellenlängenbereich von etwa 300 nm bis etwa 1000 nm hochgradig durchlässig. Es ist UV-beständig gegen eine dauerhafte Bestrahlung mit Wellenlängen von unter 400 nm und einer Energiedichte von mehr als 10 Watt/cm².

Die Herstellung eines der vorstehend beschriebenen optischen Module erfolgt jeweils nach folgendem Verfahren:
Zunächst wird eine offene Gießform 6 (siehe Fig. 2) bereit gestellt, die unter anderem die Negativformen der Ausformungen für die optischen Elemente 4 enthält. Ferner sind in der Form 6 Auflagen 6a in Form von Stegen oder Nasen zur positionierten Auflage des Substrats 1 vorgesehen.

Sodann wird das Substrat 1 auf seiner zu beschichtenden Oberfläche 5, gegebenenfalls nach einem Reinigungsschritt, mit einem Haftvermittler 2 beschichtet. Die Beschichtung erfolgt zum Beispiel durch Auftropfen und Abblasen überschüssiger Substanz, wodurch zugleich eine Trocknung des verbleibenden Haftvermittlers erfolgt. Im Idealfall beträgt die Dicke des aufgetragenen Haftvermittlers nur eine Monolage, in jedem Fall bevorzugt aber weniger als 100 nm.

Sobald das Substrat auf diese Weise präpariert ist, wird ein Silikongemisch aus zwei Komponenten hergestellt und in die offene Gießform eingebracht. Dabei enthält die eine Komponente einen Katalysator und die andere Komponente einen Vernetzer. Das Gemisch hat eine Viskosität von vorliegend weniger als 50 mPa*s. Durch die Vermischung der Komponenten beginnt im Prinzip der Vorgang der Aushärtung, der aber bei niedrigen Temperaturen wie etwa Raumtemperatur recht langsam verläuft.

Nachfolgend wird das Substrat kontrolliert mit der beschichteten Oberfläche 5 nach unten in die Gießform eingebracht und in das Silikongemisch eingetaucht (siehe Fig. 2, linke Seite).

Dabei kann insbesondere ein Überlauf 7 an der Gießform vorgesehen sein, wie in Fig. 3 schematisch dargestellt. Dieser sorgt in Verbindung mit der niedrigen Viskosität des Silikons dafür, dass eine Eintauchtiefe des Substrats gut definiert ist und insbesondere vom Substrat verdrängtes Silikon abfließen kann. Auf diese Weise kann zum Beispiel bei Bedarf sichergestellt werden, neben der Oberfläche 5 des Substrats auch die Stirnseiten des Substrats mit einem umlaufenden Rand 8 der Schicht 3 bedeckt werden, eine Rückseite 9 des Substrats aber nicht beschichtet wird. Bei anderen Ausführungsformen kann aber auch eine vollständige Ummantelung des Substrats gewünscht sein.

Der Rand 8 hat einerseits eine Schutzfunktion für das Trägersubstrat 1, bei Halterung an dessen Rand oder modularer Anreihung dieser Optiken auf Stoß, und er ermöglicht eine direkte, lückenlose, transparente Anreihung der Substrate und somit eine Minimierung der Lichtablenkung an den optischen Grenzflächen zwischen zwei Trägersubstraten.

Nachdem das Substrat auf den Auflagen 6a positioniert ist, wird bei Bedarf noch kontrolliert, ob die Benetzung der Oberfläche 5 vollständig und insbesondere ohne Luftblasen erfolgt ist. Bei einer möglichen Weiterbildung der Erfindung kann das Eintauchen des Substrats auch in einem Vakuum erfolgen, um die Problematik von Luftblasen zu verringern. Allgemein ist aber aufgrund der niedrigen Viskosität auch ohne Vakuum eine blasenfreie Beschichtung erzielbar.

Nach der Positionierung erfolgt die Aushärtung bzw. Vernetzung des Silikons. Diese wird zweckmäßig durch eine Temperaturerhöhung erheblich beschleunigt. Bei einer Temperatur von etwa 100 °C kann die Aushärtung in typisch einer halben Stunde erfolgen. Bei Temperaturen im Bereich von 150 °C kann die Aushärtung typisch in wenigen Minuten erfolgen. Bei der Wahl der Temperatur für diese thermische Aushärtung sind auch die Eigenschaften des jeweiligen Substrates zu berücksichtigen.

Sobald das Silikon ausgehärtet ist, kann das nun beschichtete Substrat aus der wiederverwendbaren Gießform entnommen werden, siehe rechte Abbildung in Fig. 2.

Da vorliegend ein hochreines Silikon ohne Beimengung von Haftvermittlern in dem Silikon verwendet wird, sind auch keine weiteren Maßnahmen zur Trennung des Silikons 3 von der Form 6 erforderlich. Insbesondere wird auf die Auslegung der Gießform mit einer Trennfolie oder Ähnliches verzichtet. Hierdurch wird die Herstellung vereinfacht und ein sehr genauer Abguss der Strukturen der Gießform wird ermöglicht.

Das vorstehend beschriebene Verfahren kann bei bedarf mehrfach hintereinander auf dasselbe Objekt angewendet werden. Fig. 4 und Fig. 5 zeigen Ausführungsformen der Erfindung, die jeweils solche Weiterbildungen von Beispielen aus Fig. 4 darstellen. Dabei wurde jeweils nach dem Herstellen einer ersten Schicht 3 mit optischen Elementen 4 eine zweite Schicht 3' mit optischen Elementen 4' hergestellt.

Im Fall des Beispiels nach Fig. 4 wurde die zweite Schicht 3' auf die Rückseite bzw. gegenüberliegende Seiten des vorliegend als flache Platte ausgebildeten Substrats 1 aufgebracht. Hierzu muss lediglich das Substrat auf der noch unbeschichteten Seite 9 mit einem Haftvermittler 2 versehen werden und dann voran in eine entsprechende Gießform 6 eingebracht werden. Die weiteren Verfahrensschritte erfolgen wie vorstehend beschrieben.

In dem gezeigten Beispiel Fig. 4 ist zu Illustrationszwecken die erste Oberfläche 5 bzw. die Vorderseite des Substrats 1 mit einer Mehrzahl von Sammellinsen 4 beschichtet worden. Die zweite Oberfläche 9 bzw. Rückseite des Substrats 1 wurde mit Fresnel-Linsen 4' beschichtet, die jeweils mit den Sammellinsen 4 ausgerichtet sind.

Bei dem in Fig. 5 gezeigten Beispiel wurde zunächst eine Schicht 3, vorliegend mit Fresnel-Linsen, auf die erste Oberfläche 5 bzw. die Vorderseite des Substrats aufgebracht. Nachfolgend wurde auf diese Schicht 3 ein Haftvermittler 2 aufgebracht und eine zweite Schicht 3' mit Sammellinsen 4' wurde auf die erste Schicht 3 aufgebracht. In diesem Fall stellt die erste aufgebrachte Schicht 3 das Substrat im Sinne der Erfindung dar, und ihre äußere Oberfläche ist die zweite Oberfläche 9.

Im Prinzip sind Anzahl und Ausgestaltung solcher mehrfachen Schichten keine Grenzen gesetzt.

Die Schichten können auch eine unterschiedliche Zusammensetzung des Vergussmaterials aufweisen, insbesondere unterschiedlichen Vergussmaterialien und/oder Beimischungen zu den Vergussmaterialien. So können verschiedene Eigenschaften miteinander kombiniert werden, oder die optischen Eigenschaften beim Aufbringen vieler Schichten nahezu graduell beeinflusst werden, z.B. durch leichte Veränderung des Brechungsindexes des eingesetzten Vergussmaterials. Ebenso kann die aktuell abschließende Grenzschicht vor der Aufbringung der nächsten Schicht beeinflusst und verändert werden, z.B. durch
Silanisierung einer Silikongrenzschicht, einer dielektrischen oder metallischen Beschichtung durch Sputtern, Besprühen, Benetzen, oder weiteren gängigen Oberflächenbeschichtungsverfahren.

Vorstehend wird die Verwendung von besonders reinem Silikon als bevorzugt genannt, um insbesondere hohe Transmissionen und Materialbeständigkeit in kritischen Wellenlängenbereichen zu optimieren. Grundsätzlich kann aber das Vergussmaterial mit optisch wirksamen Materialien gefüllt werden, um so weitere optische Funktionalitäten zu erzeugen, wie z.B. Konversion der Lichtwellenlänge mittels der Einbringung von phosphoreszierenden und fluoreszierenden Stoffen, wie z.B. seltene Erden, oder zur Beeinflussung der Opazität der Optik mittels Einbringung streuender Stoffen, wie z.B. transparenter oder transluzenter Partikel (z.B. aus Glas, oder Keramik) oder metallischen Partikel.

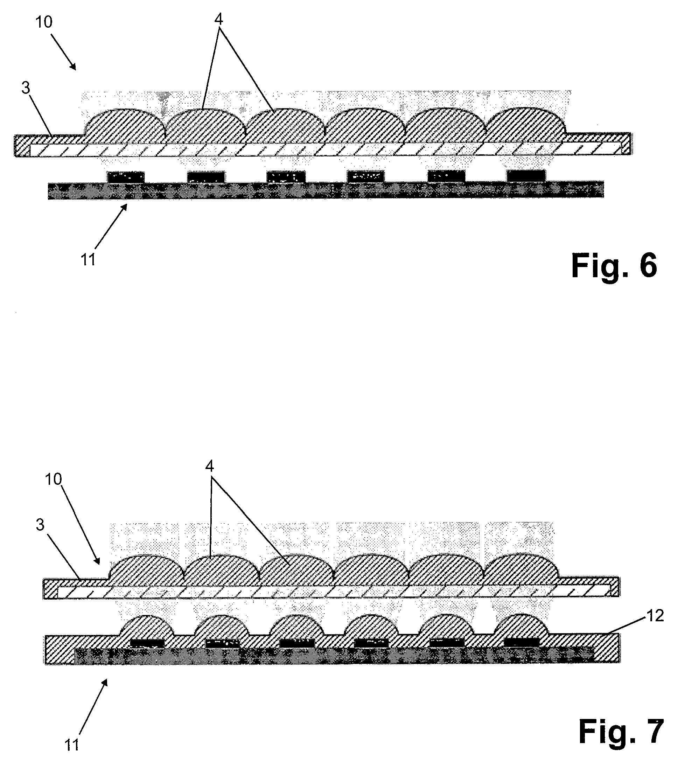

Fig. 6 zeigt eine bevorzugte Verwendung einer vorstehend beschriebenen Optik 10 in Verbindung mit einer flächigen Lichtquelle. Die Lichtquelle ist hier als LED-Modul 11 mit einer Anzahl von in einem Raster angeordneten LEDs ausgebildet. Die Optik ist beabstandet vor der Lichtquelle angeordnet und bricht auf gewünschte Weise das Licht der einzelnen LEDs, vorliegend durch jeweils einer LED zugeordnete Sammellinsen.

Fig. 7 zeigt eine weitere bevorzugte Verwendung, bei der ein LED-Modul 11 mit einem Modul nach Fig. 1 kombiniert ist. Dabei ist das LED-Modul 11 mit einer Primäroptik 12 ausgebildet. Dem ersten optischen Modul ist ein als Optik 10 ausgebildetes optisches Modul vorgelagert. Vorliegend weisen beide Module jeweils mehrere, mit den LEDs korrelierte Sammellinsen auf, die in Zusammenwirkung insgesamt einen großen Öffnungswinkel der LEDs transportieren.

Das LED-Modul 11 mit der Primäroptik 12 kann zum Beispiel gemäß der Lehre der WO 2012/031703 A1 hergestellt sein.

## Patentansprüche

1. Verfahren zur Herstellung eines optischen Moduls, umfassend die Schritte:
a. Bereitstellen eines als lichtdurchlässiger Träger ausgebildeten Substrats (1) mit einer ersten Oberfläche (5);
b. Bereitstellen einer offenen Gießform (6), wobei in der Gießform die Ausformung zumindest eines optischen Elements (4, 4') ausgebildet ist;
c. Überdecken der Oberfläche (5) mit einem polymeren Vergussmittel (3) in der offenen Gießform unter Ausbildung des optischen Elements aus dem Vergussmittel (3), wobei das polymere Vergussmittel (3) zumindest überwiegend aus einem Silikon besteht;
d. Aushärten des Vergussmittels in der Gießform, wobei der lichtdurchlässige Träger und das Vergussmittel (3) insgesamt eine Optik (10) ausbilden,
wobei die erste Oberfläche (5) vor dem Überdecken mit dem polymeren Vergussmittel (3) mit einem Haftvermittler (2) beschichtet wird und wobei der Haftvermittler (2) aus einem Gemisch aus reaktiven Siloxanen und Siliziumharzen besteht.

2. Verfahren nach Anspruch 1, **dadurch gekennzeichnet, dass** das polymere Vergussmittel keinen Haftvermittler als Beimischung enthält.

3. Verfahren nach einem der vorhergehenden Ansprüche, **dadurch gekennzeichnet, dass** das polymere Vergussmittel einen Katalysator zur Einleitung eines Aushärtungsvorgangs enthält.

4. Verfahren nach einem der vorhergehenden Ansprüche, umfassend den Schritt:
Erwärmen des polymeren Vergussmittels (3) in der Gießform auf eine definierte Temperatur zur Einleitung und/oder Beschleunigung einer Aushärtung.

5. Verfahren nach einem der vorhergehenden Ansprüche, **dadurch gekennzeichnet, dass** der Haftvermittler (2) in einer mittleren Schichtdicke von weniger als 100 nm auf die Oberfläche (5) aufgebracht wird.

6. Verfahren nach einem der vorhergehenden Ansprüche, **dadurch gekennzeichnet, dass** das polymere Vergussmittel (3) vor einer Aushärtung eine Viskosität von weniger als 1000 mPa*s aufweist.

7. Verfahren nach einem der vorhergehenden Ansprüche, **dadurch gekennzeichnet, dass** das Silikon (3) unmittelbar vor einem Einbringen in die Gießform (6) als Gemisch zumindest zweier Silikone ausgebildet wird.

8. Verfahren nach einem der vorhergehenden Ansprüche, **dadurch gekennzeichnet, dass** das Silikon (3) hochrein ist und weniger als 100 ppm an Fremdstoffen enthält.

9. Verfahren nach einem der vorhergehenden Ansprüche, umfassend den Schritt:
Beschichten einer zweiten Oberfläche (9) nach Schritt d, wobei die Beschichtung der zweiten Oberfläche (9) ebenfalls die Verfahrensschritte a bis d umfasst.

## Claims

1. Method for producing an optical module, comprising the steps of:
a. Providing a substrate (1) that is provided as a transparent support and has a first surface (5):
b. providing an open casting mould (6), whereby the moulding of at least one optical element (4, 4') is provided in the casting mould;
c. covering the surface (5) with a polymeric casting compound (3) in the open casting mould while forming the optical element from the casting compound (3), whereby the polymeric casting compound (3) consists, at least mostly, of a silicone;
d. curing the casting compound in the casting mould, whereby the transparent support and the casting compound (3) together form an optical system (10),
whereby the first surface (5) is being coated with a bonding agent (2) before covering it with the polymeric casting compound (3), and whereby the bonding agent (2) consists of a mixture of reactive siloxanes and silicon resins.

2. Method according to claim 1, **characterised in that** the polymeric casting compound does not contain any bonding agent admixed to it.

3. Method according to any one of the preceding claims, **characterised in that** the polymeric casting compound contains a catalyst for initiation of a curing process.

4. Method according to any one of the preceding claims, comprising the step of:
heating the polymeric casting compound (3) in the casting mould to a defined temperature for initiation and/or acceleration of a curing.

5. Method according to any one of the preceding claims, **characterised in that** the bonding agent (2) is applied to the surface (5) at a mean layer thickness of less than 100 nm.

6. Method according to any one of the preceding claims, **characterised in that** the polymeric casting compound (3) comprises a viscosity before curing of less than 1,000 mPa*s.

7. Method according to any one of the preceding claims, **characterised in that** the silicone (3) is formed as a mixture of at least two silicones right before introduction into the casting mould (6).

8. Method according to any one of the preceding claims, **characterised in that** the silicone (3) is highly pure and contains less than 100 ppm of foreign matter.

9. Method according to any one of the preceding claims, comprising the step of:
coating a second surface (9) according to step d, whereby the coating of the second surface (9) also comprises procedural steps a to d.

## Revendications

1. Procédé de fabrication d'un module optique, comprenant les étapes consistant à:
a. fournir un substrat (1) se présentant sous la forme d'un support transparent, comprenant une première surface (5) ;
b. fournir un moule ouvert (6), la forme d'au moins un élément optique (4, 4') étant formée dans le moule ;
c. recouvrir la surface (5) avec un produit de coulée polymère (3) dans le moule ouvert en formant l'élément optique à partir du produit de coulée (3), le produit de coulée polymère (3) se composant au moins principalement d'une silicone ;
d. faire durcir le produit de coulée dans le moule, le support transparent et le produit de coulée (3) formant au total une optique (10),
dans lequel la première surface (5) est revêtue d'un agent de pontage (2) avant le recouvrement avec le produit de coulée polymère (3) et dans lequel l'agent de pontage (2) se compose d'un mélange de siloxanes réactifs et de résines de silicone.

2. Procédé selon la revendication 1, **caractérisé en ce que** le produit de coulée polymère ne contient pas d'agent de pontage comme additif.

3. Procédé selon l'une des revendications précédentes, **caractérisé en ce que** le produit de coulée polymère contient un catalyseur pour commencer un processus de durcissement.

4. Procédé selon l'une des revendications précédentes, comprenant l'étape consistant à :
chauffer le produit de coulée polymère (3) dans le moule à une température définie pour commencer et/ou accélérer un durcissement.

5. Procédé selon l'une des revendications précédentes, **caractérisé en ce que** l'agent de pontage (2) est appliqué sur la surface (5) avec une épaisseur de couche moyenne inférieure à 100 nm.

6. Procédé selon l'une des revendications précédentes, **caractérisé en ce que** le produit de coulée polymère (3) présente une viscosité inférieure à 1000 mPa·s avant un durcissement.

7. Procédé selon l'une des revendications précédentes, **caractérisé en ce que** la silicone (3) se présente sous la forme d'un mélange d'au moins deux silicones directement avant l'introduction dans le moule (6).

8. Procédé selon l'une des revendications précédentes, **caractérisé en ce que** la silicone (3) est de grande pureté et contient moins de 100 ppm d'impuretés.

9. Procédé selon l'une des revendications précédentes, comprenant l'étape consistant à :
revêtir une seconde surface (9) après l'étape d, le revêtement de la seconde surface (9) comprenant également les étapes de procédé a à d.
